# EUROPEAN PATENT APPLICATION

(11) **EP 4 718 661 A1**
(43) Date of publication of application: **01.04.2026**
(21) Application number: 23947219.4
(22) Date of filing: 17.08.2023
(51) Int. Cl.: H02J 3/38, H02J 3/28, H02J 3/32

(54) **PHOTOVOLTAIC SYSTEM**

(30) Priority: 02.08.2023 CN 202310966869
(71) Applicant: Altenergy Power System Inc., Jiaxing, Zhejiang 314050 (CN)
(72) Inventor: LUO, Yuhao, Jiaxing, Zhejiang 314050 (CN); ZHOU, Dongming, Jiaxing, Zhejiang 314050 (CN); QI, Biaojie, Jiaxing, Zhejiang 314050 (CN); YANG, Yongchun, Jiaxing, Zhejiang 314050 (CN); ZHU, Xuan, Jiaxing, Zhejiang 314050 (CN)
(74) Representative: Müller Schupfner & Partner Patent- und Rechtsanwaltspartnerschaft mbB (Muc)
(86) International application number: PCT/CN2023/113501
(87) International publication number: WO 2025/025276

(57) **Abstract**

A photovoltaic system, relating to the field of power conversion devices. The photovoltaic system comprises: a photovoltaic module (12), which is used for supplying power to an energy storage module (11) and/or an inverter circuit (21); the energy storage module (11), which is used for receiving the power that is output by the photovoltaic module (12), or supplying power to the inverter circuit (21) when the photovoltaic module (12) does not operate; and the inverter circuit (21), which is used for inverting to a power grid the power supplied by the photovoltaic module (12) and/or the energy storage module (11). The photovoltaic module (12) and the energy storage module (11) can be directly connected to the inverter circuit (21), thereby preventing the loss caused by the conversion of a direct current-direct current module during the power exchange between the photovoltaic module (12) and the energy storage module (11). In addition, the power exchange between the photovoltaic module (12) and the energy storage module (11) is completed on a low-voltage side, thereby ensuring better safety.

## Description

### CROSS REFERENCE OF RELATED APPLICATION

The present application claims priority to the Chinese Patent Application No. 202310966869.0, titled "PHOTOVOLTAIC SYSTEM", filed on August 02, 2023 with the China National Intellectual Property Administration, which is incorporated herein by reference in its entirety.

### FIELD

The present disclosure relates to the field of power conversion devices, and in particular to a photovoltaic system.

### BACKGROUND

In a photovoltaic system and an energy storage system, a direct current-direct current module and a direct current-alternating current module are two important components. The direct current-direct current module and the direct current-alternating current module are connected via a direct current bus, a photovoltaic module is connected to the direct current-direct current module, and an output terminal of a battery module is also connected to the direct current bus. When power interaction is performed between the photovoltaic module and the battery module, the direct current-direct current module is required for conversion, which leads to certain loss, resulting in lower power conversion efficiency. In addition, a voltage on the direct current bus is relatively high, resulting in low safety. Therefore, in the related art, although a direct current-direct current module provides a function of power interaction, issues related to efficiency and safety also exist.

### SUMMARY

An objective of the present disclosure is to provide a photovoltaic system, where a photovoltaic module and an energy storage module may be directly connected to an inverter circuit. Loss generated by conversion of a direct current-direct current module during power interaction between the photovoltaic module and the energy storage module is avoided. Furthermore, the power interaction between the photovoltaic module and the energy storage module is completed on a low-voltage side, which ensures high safety.

To address the above technical problems, a photovoltaic system is provided according to the present disclosure, and the photovoltaic system includes:
a photovoltaic module configured to supply power to an energy storage module and/or an inverter circuit;
the energy storage module, where an output terminal of the energy storage module is connected to an output terminal of the photovoltaic module, and the energy storage module is configured to receive power outputted from the photovoltaic module, or the energy storage module is configured to supply power to the inverter circuit when the photovoltaic module is not in operation; and
the inverter circuit, where an input terminal of the inverter circuit is connected to the output terminal of the photovoltaic module and the output terminal of the energy storage module, and the inverter circuit is configured to invert the power supplied from the photovoltaic module and/or the power supplied from the energy storage module to a grid.

In an embodiment, when the photovoltaic module is provided with a voltage threshold of current backflow, the energy storage module is configured to receive the power outputted from the photovoltaic module, or the energy storage module is configured to supply a voltage lower than the voltage threshold of current backflow to the inverter circuit when the photovoltaic module is not in operation.

In an embodiment, the photovoltaic system further includes:
a protection switch, where one terminal of the protection switch is connected to the output terminal of the photovoltaic module, the other terminal of the protection switch is connected to the output terminal of the energy storage module and the input terminal of the inverter circuit, and the protection switch is configured to be open when the photovoltaic module is not in operation and the energy storage module is supplying power to the inverter circuit.

In an embodiment, the protection switch is configured to receive a control command when the photovoltaic module is not in operation and the energy storage module supplies power to the inverter circuit, and the protection switch is configured to make itself open based on the control command.

In an embodiment, the protection switch is a relay, a MOSFET, or a contactor.

In an embodiment, the photovoltaic system further includes:
a first auxiliary power supply, where one terminal of the first auxiliary power supply is connected to the output terminal of the photovoltaic module, the other terminal of the first auxiliary power supply is connected to a power supply terminal of the protection switch, and the first auxiliary power supply is configured to convert an output voltage of the photovoltaic module into a first preset voltage, to supply power to the protection switch,
where when the photovoltaic module is not in operation, a voltage outputted from the first auxiliary power supply is lower than the first preset voltage, and the protection switch is open.

In an embodiment, the photovoltaic system further includes:
a second auxiliary power supply, where one terminal of the second auxiliary power supply is connected to the output terminal of the photovoltaic module and the output terminal of the energy storage module, the other terminal of the second auxiliary power supply is connected to a power supply terminal of the inverter circuit, and the second auxiliary power supply is configured to convert the output voltage of the photovoltaic module and/or an output voltage of the energy storage module into a second preset voltage, to supply power to units in the inverter circuit respectively.

In an embodiment, the photovoltaic system further includes:
a maximum power point tracking (MPPT) module, where an input terminal of the MPPT module is connected to the output terminal of the photovoltaic module, a first output terminal of the MPPT module is connected to a control terminal of the inverter circuit, the MPPT module is configured to detect an output power of the photovoltaic module, and the MPPT module is configured to perform maximum power point tracking based on the output power, to control operations of a switching transistor in the inverter circuit.

In an embodiment, the MPPT module further includes a second output terminal, and the second output terminal is connected to a control terminal of the energy storage module; and
the MPPT module is further configured to determine whether the output power of the photovoltaic module is greater than a maximum power set for the inverter circuit, and when the output power of the photovoltaic module is greater than the maximum power set for the inverter circuit, the MPPT module is further configured to control the switching transistor in the inverter circuit to operate at a maximum power state, and to control operations of a switching transistor in the energy storage module based on a difference between the output power and the maximum power.

In an embodiment, the MPPT module includes:
a current sampling circuit, where the current sampling circuit is connected to the output terminal of the photovoltaic module, and the current sampling circuit is configured to collect an output current of the photovoltaic module;
a voltage sampling circuit, where the voltage sampling circuit is connected to the output terminal of the photovoltaic module, and the voltage sampling circuit is configured to collect an output voltage of the photovoltaic module; and
a calculation module, where an input terminal of the calculation module is connected to an output terminal of the current sampling circuit and an output terminal of the voltage sampling circuit respectively, an output terminal of the calculation module is connected to the control terminal of the inverter circuit and the control terminal of the energy storage module respectively, the calculation module is configured to calculate the output power based on the output current and the output voltage, and the calculation module is configured to output a control signal to the inverter circuit and/or the energy storage module based on the output power and the maximum power set for the inverter circuit, to control operations of the switching transistor in the inverter circuit and/or the switching transistor in the energy storage module.

A photovoltaic system is provided according to the present disclosure, and relates to the field of power conversion devices. The system includes: a photovoltaic module configured to supply power to an energy storage module and/or an inverter circuit, the energy storage module configured to receive power outputted from the photovoltaic module, or to supply power to the inverter circuit when the photovoltaic module is not in operation, and the inverter circuit configured to invert the power supplied from the photovoltaic module and/or the power supplied from the energy storage module to a grid. It may be seen that in the present disclosure, the photovoltaic module and the energy storage module may be directly connected to the inverter circuit. Loss generated by conversion of a direct current-direct current module during power interaction between the photovoltaic module and the energy storage module is avoided. Furthermore, the power interaction between the photovoltaic module and the energy storage module is completed on a low-voltage side, which ensures high safety.

### BRIEF DESCRIPTION OF THE DRAWINGS

In order to more clearly describe the technical solutions in the embodiments of the present disclosure, drawings to be used in description of embodiments of the present disclosure or in the related art are briefly described hereinafter. The drawings described below are merely used for describing the embodiments of the present disclosure, and those skilled in the art may obtain other drawings based on the drawings without any creative effort.
FIG. 1 is a structural block diagram of a photovoltaic system according to the related art;
FIG. 2 is a structural block diagram of a first photovoltaic system according to the present disclosure;
FIG. 3 is a structural block diagram of a second photovoltaic system according to the present disclosure;
FIG. 4 is a structural block diagram of a third photovoltaic system according to the present disclosure;
FIG. 5 is a structural block diagram of a fourth photovoltaic system according to the present disclosure;
FIG. 6 is a structural block diagram of a fifth photovoltaic system according to the present disclosure;
FIG. 7 is a flowchart of a photovoltaic system according to the present disclosure;
FIG. 8 is an expanded schematic diagram of a photovoltaic system according to the present disclosure; and
FIG. 9 is an expanded schematic diagram of another photovoltaic system according to the present disclosure.

### DETAILED DESCRIPTION OF THE EMBODIMENTS

A core of the present disclosure is to provide a photovoltaic system, where a photovoltaic module and an energy storage module may be directly connected to an inverter circuit. Loss generated by conversion of a direct current-direct current module during power interaction between the photovoltaic module and the energy storage module is avoided. Furthermore, the power interaction between the photovoltaic module and the energy storage module is completed on a low-voltage side, which ensures high safety.

In order to make the objectives, technical solutions and advantages of the embodiments of the present disclosure clearer, the technical solutions in the embodiments of the present disclosure would be described clearly and completely hereinafter with reference to the drawings in the embodiments of the present disclosure. The described embodiments are a part of embodiments of the present disclosure, rather than all of embodiments. Based on the embodiments of the present disclosure, all other embodiments obtained by those skilled in the art without any creative effort fall within the protection scope of the present disclosure.

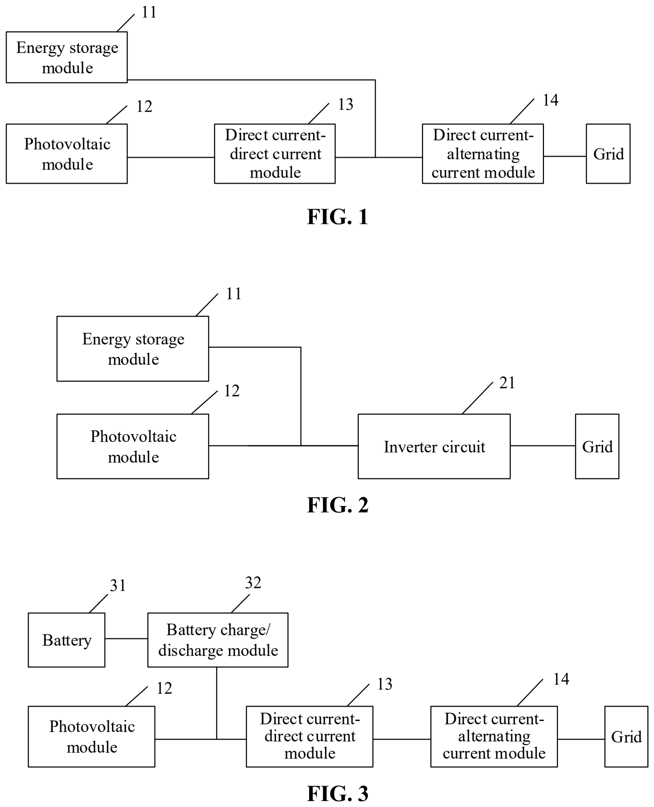

As shown in FIG. 1, in the related art, although a direct current-direct current module 13 provides a function of power interaction, issues related to efficiency and safety also exist.

To address the technical problems, a photovoltaic system is provided according to the present disclosure, as illustrated in FIG. 2. The photovoltaic system includes:
a photovoltaic module 12, configured to supply power to an energy storage module 11 and/or an inverter circuit 21;
the energy storage module 11, where an output terminal of the energy storage module 11 is connected to an output terminal of the photovoltaic module 12, and the energy storage module 11 is configured to receive power outputted from the photovoltaic module 12, or the energy storage module 11 is configured to supply power to the inverter circuit 21 when the photovoltaic module 12 is not in operation; and
the inverter circuit 21, where an input terminal of the inverter circuit 21 is connected to the output terminal of the photovoltaic module 12 and the output terminal of the energy storage module 11, and the inverter circuit 21 is configured to invert the power supplied from the photovoltaic module 12 and/or the power supplied from the energy storage module 11 to a grid.

A photovoltaic system is described in the embodiment, and is intended to address the issues related to efficiency and safety exist in the direct current-direct current module 13 in the related art. The photovoltaic system includes the following modules. The photovoltaic module 12 is a device configured for converting solar energy into electrical energy, and supplying power to the energy storage module 11 and/or the inverter circuit 21. An output of the photovoltaic module 12 is connected to the output terminal of the energy storage module 11, and the power outputted from the photovoltaic module 12 may be directly transmitted to the energy storage module 11. The energy storage module 11 is a device configured for storing electrical energy, and the output terminal of the energy storage module 11 is connected to the photovoltaic module 12 and the inverter circuit 21. When the photovoltaic module 12 is in operation, the energy storage module 11 receives and stores the power outputted from the photovoltaic module 12. When the photovoltaic module 12 is not in operation, the energy storage module 11 supplies power to the inverter circuit 21. The energy storage module 11 may continue to provide continuous electrical power to the inverter circuit 21 in the absence of solar energy. The inverter circuit 21 is a device configured for inverting direct-current power into alternating-current power. The input terminal of the inverter circuit 21 is connected to the output terminal of the photovoltaic module 12 and the output terminal of the energy storage module 11, and the inverter circuit 21 may convert direct-current power supplied from the photovoltaic module 12 and/or direct-current power supplied from the energy storage module 11 into alternating-current power required by the grid. The energy storage module 11 includes, but is not limited to, a battery 31 (or an energy storage device in other forms) and a battery charge/discharge module 32 (as shown in FIG. 3). In addition, the energy storage module 11 may also be a super capacitor or other devices with energy storage capabilities. The inverter circuit 21 may only include a direct current-alternating current module 14, or may include a direct current-direct current module 13 and the direct current-alternating current module 14. A core concept of the photovoltaic system lies in directly connecting the power outputted from the photovoltaic module 12 and the power outputted from the energy storage module 11 to the inverter circuit 21, thereby avoiding conversion loss and safety issues introduced by the traditional direct current-direct current module 13.

A specific operating principle is as follows. The photovoltaic module 12 generates a direct-current power, and is connected to the energy storage module 11 via the output terminal of the photovoltaic module 12. The energy storage module 11 stores the direct-current power supplied from the photovoltaic module 12 and is connected to the inverter circuit 21 via the output terminal of the energy storage module 11 when the photovoltaic module 12 is not in operation. When the photovoltaic module 12 is not in operation, the inverter circuit 21 may still continue to operate by using power supplied from the energy storage module 11, and invert the power into an alternating current suitable for the grid.

The photovoltaic system of this configuration enhances power conversion efficiency by avoiding conversion loss caused by the traditional direct current-direct current module 13. System safety is improved, and safety hazards cause by a high voltage on a direct current bus is avoided. The system has a certain energy storage capability, and may continue to supply power to the inverter circuit 21 when the photovoltaic module 12 is not in operation, thereby increasing reliability of the system.

In summary, an innovative configuration for the photovoltaic system is provided in this embodiment. By directly connecting the photovoltaic module 12 and the energy storage module 11 to the inverter circuit 21, the issues related to the efficiency and safety inherent in the traditional direct current-direct current module 13 are solved, and overall performance of the photovoltaic system is improved.

In an embodiment, the photovoltaic module 12 is configured with a voltage threshold of current backflow. The energy storage module 11 is configured to receive the power outputted from the photovoltaic module 12, or to supply a voltage lower than the voltage threshold of current backflow to the inverter circuit 21 when the photovoltaic module 12 is not in operation.

The current backflow refers to that power from the battery 31 or other energy sources would backflow to the photovoltaic module 12 when the photovoltaic module 12 is not in operation, which causes energy loss and system instability.

To avoid a current outputted from the energy storage module 11 flowing back into the photovoltaic module 12, the photovoltaic module 12 is configured with the voltage threshold of current backflow. By setting the voltage threshold of current backflow, the energy storage module 11 may supply a voltage lower than the voltage threshold of current backflow, thereby avoiding the occurrence of current backflow. Thus, when the photovoltaic module 12 is not in operation, the energy storage module 11 may safely supply power to the inverter circuit 21, and normal operation of the photovoltaic system is ensured.

Through this photovoltaic system design, electrical energy from the photovoltaic module 12 may be efficiently utilized, and the electrical energy is stored in the energy storage module 11. Moreover, when the photovoltaic module 12 is not in operation, the energy storage module 11 may continue to supply continuous power to the inverter circuit 21. The efficiency and reliability of the photovoltaic system may be enhanced while reducing energy loss and safety risks.

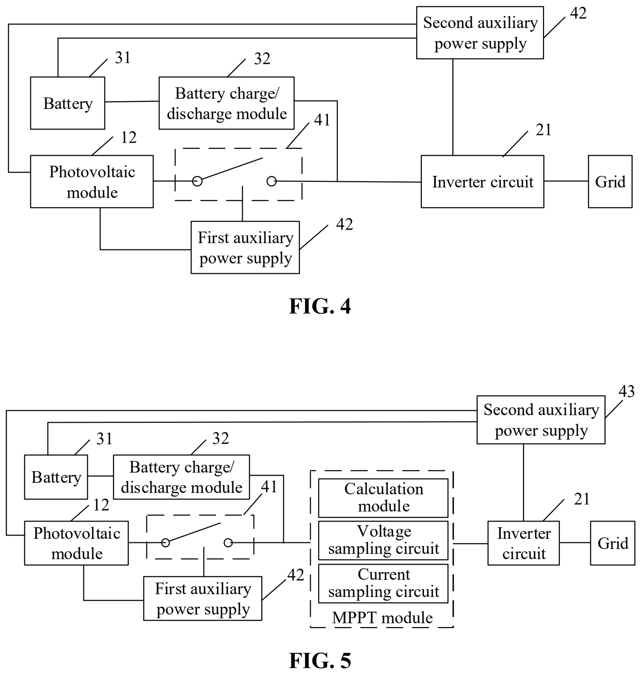

As shown in FIG. 4, in an embodiment, the photovoltaic system further includes:
a protection switch 41, where one terminal of the protection switch 41 is connected to the output terminal of the photovoltaic module 12, the other terminal of the protection switch 41 is connected to the output terminal of the energy storage module 11 and the input terminal of the inverter circuit 21, and the protection switch 41 is configured to be open when the photovoltaic module 12 is not in operation and the energy storage module 11 supplies power to the inverter circuit 21.

To ensure system safety, in this embodiment, the protection switch 41 is provided. One terminal of the protection switch 41 is connected to the output terminal of the photovoltaic module 12, and the other terminal of the protection switch 41 is connected to the output terminal of the energy storage module 11 and the input terminal of the inverter circuit 21. When the photovoltaic module 12 is not in operation and the energy storage module 11 supplies power to the inverter circuit 21, the protection switch 41 would be open, to prevent a current outputted from the energy storage module 11 from flowing back into the photovoltaic module 12, thereby ensuring system safety.

In summary, the photovoltaic system described in this embodiment adopts a technology that directly converts direct-current power outputted from the photovoltaic module 12 and the energy storage module 11 into alternating-current power outputted from the inverter circuit 21. Through this system, photovoltaic energy may be effectively utilized, converted, and connected to the grid, and the energy is efficiently converted and utilized. In addition, the introduction of the protection switch 41 further enhances system safety.

In an embodiment, the protection switch 41 is configured to receive a control command when the photovoltaic module 12 is not in operation and the energy storage module 11 supplies power to the inverter circuit 21, and the protection switch 41 is configured to make itself open based on the control command.

The protection switch 41 of the photovoltaic system is further described in the embodiment. The protection switch 41 is configured to be open under specific conditions to protect the inverter circuit 21 and the energy storage module 11.

In an embodiment, as described in the above embodiment, one terminal of the protection switch 41 is connected to the output terminal of the photovoltaic module 12, and the other terminal of the protection switch 41 is connected to the output terminal of the energy storage module 11 and the input terminal of the inverter circuit 21. When the photovoltaic module 12 is not in operation and the energy storage module 11 supplies power to the inverter circuit 21, the protection switch 41 has a function of opening the circuit. In an embodiment, the protection switch 41 may receive a control command and make itself open based on the control command. In an embodiment, when the photovoltaic module 12 is not in operation, it means that the photovoltaic module 12 cannot supply power. If the energy storage module 11 still supplies power to the inverter circuit 21, it may cause safety issues such as current backflow or damage to the device. Therefore, by making the protection switch 41 open based on the control command, circuit connection between the photovoltaic module 12 and the energy storage module 11 may be disconnected, and system safety is ensured.

Through an opening operation of the protection switch 41, the system may automatically switch to an operating mode of the energy storage module 11 supplying power to the inverter circuit 21 when the photovoltaic module 12 is not in operation. Furthermore, the protection switch 41 may be controlled based on real-time conditions, to provide safer and more reliable system operation.

In an embodiment, the protection switch 41 is a relay, a Metal-Oxide-Semiconductor Field-Effect Transistor (MOSFET), or a contactor.

In an embodiment, in the embodiment, the protection switch 41 is described as a relay, a MOSFET, or a contactor. The relay is an electronic switch, and may switch an on/off state of a circuit when receiving the control signal. The MOSFET is a semiconductor device, and on/off of the MOSFET may be controlled by changing a gate voltage, thereby switching an on/off state of a circuit. The MOSFET has advantages such as fast response speed, high control precision, and low power consumption, and is suitable for scenarios requiring switching and adjustment in the photovoltaic system. A contactor is a high-power switch implemented by an electromagnetic mechanical force, and may be configured for controlling and protecting a high-current circuit in the photovoltaic system. The contactor is suitable for various environmental conditions and load types, and has features of good durability, high reliability, etc. In addition, the protection switch 41 may be other devices capable of controlling an on/off state.

In the photovoltaic system, the relay, the MOSFET, or the contactor has a function of opening the circuit when the photovoltaic module 12 is not in operation and the energy storage module 11 supplies power to inverter circuit 21. The protection switch 41 is designed to prevent a current outputted from the energy storage module 11 from flowing back into the photovoltaic module 12. A backflow current refers to a current flowing from the battery (the energy storage module 11) to the photovoltaic module 12 through the direct current-direct current module 13. Since the photovoltaic module 12 is designed to receive an input from solar energy, the photovoltaic module 12 lacks a capability of handling the backflow current. Therefore, when the energy storage module 11 supplies power to the inverter circuit 21, the connection between the photovoltaic module 12 and the energy storage module 11 needs be open, to prevent the backflow current.

In an embodiment, the protection switch 41, which is a relay, a MOSFET, or a contactor, may open the circuit by receiving a control command. The control command may originate from a system controller or other logic circuits. The control command is configured to monitor an operating state of the photovoltaic module 12, and determine whether the circuit is required to be open. Once the protection switch 41 receives an open command, an internal electromagnetic relay, a MOSFET, or a contactor within the protection switch 41 switches to an off state, and the connection between the photovoltaic module 12 and the energy storage module 11 are disconnected.

By using a relay, a MOSFET, or a contactor as the protection switch 41, a rapid and reliable circuit disconnection function is implemented. The relay and the contactor may withstand a high current and a high voltage, and are suitable in an environment for a high-voltage direct current bus in the photovoltaic system. In addition, an operating principle of the relay is based on electromagnetic engagement and release, and has low power consumption and long service life.

As shown in FIG. 4, in an embodiment, the photovoltaic system further includes:
a first auxiliary power supply 42, where one terminal of the first auxiliary power supply 42 is connected to the output terminal of the photovoltaic module 12, the other terminal of the first auxiliary power supply 42 is connected to a power supply terminal of the protection switch 41, and the first auxiliary power supply 42 is configured to convert an output voltage of the photovoltaic module 12 into a first preset voltage, to supply power to the protection switch 41,
where when the photovoltaic module 12 is not in operation, a voltage outputted from the first auxiliary power supply 42 is lower than the first preset voltage, and the protection switch 41 is open.

In this embodiment, the photovoltaic system further includes the first auxiliary power supply 42. One terminal of the first auxiliary power supply 42 is connected to the output terminal of the photovoltaic module 12, and the other terminal of the first auxiliary power supply 42 is connected to the power supply terminal of the protection switch 41. The first auxiliary power supply 42 functions to convert the output voltage of the photovoltaic module 12 into a specified first preset voltage, to supply power to the protection switch 41. When the photovoltaic module 12 is not in operation, that is, no output voltage is generated, the output voltage of the first auxiliary power supply 42 would be less than the first preset voltage, leading to opening of the protection switch 41.

The protection switch 41 is open when the photovoltaic module 12 is not in operation and the energy storage module 11 supplies power to the inverter circuit 21. In this case, the protection switch 41 would receive a control command, and make itself open based on the control command. In this way, a current outputted from the energy storage module 11 is prevented from flowing back into the photovoltaic module 12, thereby ensuring normal operation and safety of the system.

In summary, the combination of the first auxiliary power supply 42 and the protection switch 41 described in this embodiment may avoid a current outputted from the energy storage module 11 flowing back into the photovoltaic module 12 by opening the protection switch 41 when the photovoltaic module 12 is not in operation. The efficiency and safety of the system are enhanced.

As shown in FIG. 5, in an embodiment, the photovoltaic system further includes:
a second auxiliary power supply 43, where one terminal of the second auxiliary power supply 43 is connected to the output terminal of the photovoltaic module 12 and the output terminal of the energy storage module 11, the other terminal of the second auxiliary power supply 43 is connected to a power supply terminal of the inverter circuit 21, and the second auxiliary power supply 43 is configured to convert the output voltage of the photovoltaic module 12 and/or an output voltage of the energy storage module 11 into a second preset voltage, to supply power to units in the inverter circuit 21 respectively.

In this embodiment, the second auxiliary power supply 43 is connected to the output terminal of the photovoltaic module 12 and the output terminal of the energy storage module 11, and the second auxiliary power supply 43 converts the output voltages of the photovoltaic module 12 and the energy storage module 11 into the second preset voltage, to supply power to units in the inverter circuit 21 respectively. The second auxiliary power supply 43 functions to supply power to the inverter circuit 21, to ensure normal operation of the inverter circuit 21. In the photovoltaic system, the second auxiliary power supply 43 requires a voltage conversion capability. The second auxiliary power supply 43 converts the output voltages of the photovoltaic module 12 and the energy storage module 11 into the second preset voltage required by the inverter circuit 21. Regardless of whether it is the output voltage of the photovoltaic module 12 or it is the output voltage of the energy storage module 11, the second auxiliary power supply 43 may convert it into a voltage suitable for the inverter circuit 21.

The second auxiliary power supply 43 in this embodiment is an important component of the photovoltaic system. The second auxiliary power supply 43 supplies a stable power to the inverter circuit 21 by converting the output voltages of the photovoltaic module 12 and the energy storage module 11 into the voltage required by the inverter circuit 21. This design enhances the reliability of the photovoltaic system, and improves the operating efficiency of the inverter circuit 21.

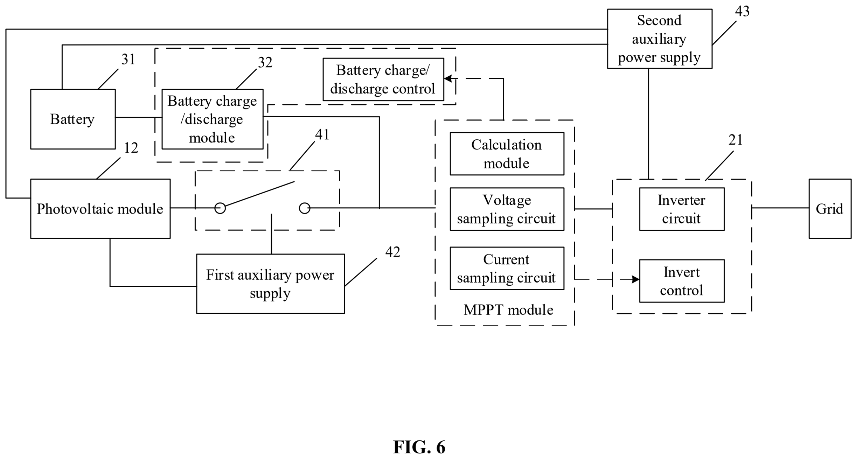

As shown in FIG. 6, in an embodiment, the photovoltaic system further includes:
a maximum power point tracking (MPPT) module, where an input terminal of the MPPT module is connected to the output terminal of the photovoltaic module 12, a first output terminal of the MPPT module is connected to a control terminal of the inverter circuit 21, the MPPT module is configured to detect an output power of the photovoltaic module 12, and the MPPT module is configured to perform maximum power point tracking based on the output power, to control operations of a switching transistor in the inverter circuit 21.

In the embodiment, another feature of the photovoltaic system is described, that is, the setting and function of the maximum power point tracking (MPPT) module. The input terminal of the MPPT module is connected to the output terminal of the photovoltaic module 12, and the first output terminal is connected to the control terminal of the inverter circuit 21. Firstly, the MPPT module is configured to detect the output power of the photovoltaic module 12 and perform maximum power point tracking based on the output power. This means that the MPPT module may monitor an output of the photovoltaic module 12 and determine an optimal operating point, to ensure that the photovoltaic module 12 operates at maximum efficiency. Through the maximum power point tracking, the MPPT module may optimize power output of the photovoltaic module 12. Secondly, controlling operations of the switching transistor in the inverter circuit 21 is involved in this embodiment. The inverter circuit 21 is configured to invert the power supplied from the photovoltaic module 12 and/or the power supplied from the energy storage module 11 into power required by the grid. By connecting to the control terminal of the inverter circuit 21, the MPPT module may adjust the operation of the inverter circuit 21 by controlling operations of the switching transistor, to control an output to the grid.

Overall, a method for improving the efficiency of the photovoltaic system and controlling the output to the grid is provided according to the embodiment. By using the maximum power point tracking module, the system may fully utilize output energy of the photovoltaic module 12, and optimally control the output to grid by controlling the inverter circuit 21, which improves energy utilization and overall performance of the photovoltaic system.

In an embodiment, the MPPT module further includes a second output terminal, and the second output terminal is connected to a control terminal of the energy storage module 11; and
the MPPT module is further configured to determine whether the output power of the photovoltaic module 12 is greater than a maximum power set for the inverter circuit 21, and when the output power of the photovoltaic module 12 is greater than the maximum power set for the inverter circuit 21, the MPPT module is further configured to control the switching transistor in the inverter circuit 21 to operate at a maximum power state, and to control operations of a switching transistor in the energy storage module 11 based on a difference between the output power and the maximum power.

In this embodiment, functions and roles of the maximum power point tracking (MPPT) module are further described. Firstly, the second output terminal of the MPPT module is connected to the control terminal of the energy storage module 11, which indicates that the MPPT module not only controls the switching transistor in the inverter circuit 21, but also controls operations of the switching transistor in the energy storage module 11. Secondly, the MPPT module is further configured to determine whether the output power of the photovoltaic module 12 is greater than the maximum power set for the inverter circuit 21. The maximum power point tracking aims to ensure that the power outputted from the photovoltaic module 12 may reach the maximum value, thereby enhancing efficiency and productivity of the system. If the output power of the photovoltaic module 12 is greater than the maximum power set for the inverter circuit 21, the MPPT module controls the switching transistor in the inverter circuit 21 to operate at the maximum power state, to ensure that the power outputted from the photovoltaic module 12 is maximized. Finally, the MPPT module performs adjustment by controlling the operations of the switching transistor in the energy storage module 11 based on the difference between the output power of the photovoltaic module 12 and the maximum power. This means that the output power of the energy storage module 11 may be dynamically adjusted based on fluctuations in the output power of the photovoltaic module 12, to maintain stability and efficiency of the system.

In summary, in this embodiment, the functions and roles of the MPPT module are described, including controlling the operations of the switching transistors in the inverter circuit 21 and the energy storage module 11, determining whether the output power of the photovoltaic module 12 is greater than the maximum power, and making corresponding adjustments. This design may maximize the efficiency and productivity of the photovoltaic system while ensuring stability of the system.

As shown in FIG. 6, in an embodiment, the MPPT module includes:
a current sampling circuit, where the current sampling circuit is connected to the output terminal of the photovoltaic module 12, and the current sampling circuit is configured to collect an output current of the photovoltaic module 12;
a voltage sampling circuit, where the voltage sampling circuit is connected to the output terminal of the photovoltaic module 12, and the voltage sampling circuit is configured to collect the output voltage of the photovoltaic module 12; and
a calculation module, where an input terminal of the calculation module is connected to an output terminal of the current sampling circuit and an output terminal of the voltage sampling circuit respectively, an output terminal of the calculation module is connected to the control terminal of the inverter circuit 21 and the control terminal of the energy storage module 11 respectively, the calculation module is configured to calculate the output power based on the output current and the output voltage, and the calculation module is configured to output a control signal to the inverter circuit 21 and/or the energy storage module 11 based on the output power and the maximum power set for the inverter circuit 21, to control operations of the switching transistor in the inverter circuit 21 and/or the switching transistor in the energy storage module 11.

In this embodiment, an embodiment of a maximum power point tracking (MPPT) module in a MPPT functionality is further described. The MPPT module functions to calculate the output power of the photovoltaic module 12 by collecting the output current and the output voltage of the photovoltaic module 12, and output a control signal to the inverter circuit 21 and/or the energy storage module 11 based on a difference between the output power and the maximum power set for the inverter circuit 21, to control the operations of the switching transistor in the inverter circuit 21 and/or the switching transistor in the energy storage module 11.

In an embodiment, the MPPT module includes the following components: a current sampling circuit, a voltage sampling circuit and a calculation module. The current sampling circuit is connected to the output terminal of the photovoltaic module 12, and is configured to collect an output current of the photovoltaic module 12. The voltage sampling circuit is connected to the output terminal of the photovoltaic module 12, and is configured to collect an output voltage of the photovoltaic module 12. The input terminal of the calculation module is connected to an output terminal of the current sampling circuit and an output terminal of the voltage sampling circuit respectively. The calculation module obtains the output power of the photovoltaic module 12 through calculation based on collected data of the output current and the output voltage. The output terminal of the calculation module is connected to the control terminal of the inverter circuit 21 and the control terminal of the energy storage module 11 respectively. Based on the difference between the output power and the maximum power set for the inverter circuit 21, the calculation module outputs a control signal to the inverter circuit 21 and/or the energy storage module 11.

Through the control signal, the switching transistor in the inverter circuit 21 and/or the switching transistor in the energy storage module 11 may be dynamically adjusted based on the output power of the photovoltaic module 12. When the output power of the photovoltaic module 12 is greater than the maximum power set for the inverter circuit 21, the MPPT module controls the switching transistor in the inverter circuit 21 to operate at the maximum power state, and controls the operations of the switching transistor in the energy storage module 11 based on the difference between the output power and the maximum power.

Furthermore, as shown in FIG. 6, a specific method for controlling the inverter circuit 21 may be, but is not limited to, sending a control command to an inverter control module to trigger the inverter control module to control the switching transistor in the inverter circuit 21. Similarly, when the energy storage module 11 includes the battery 31 and the battery charge/discharge module 32, a specific method for controlling the energy storage module 11 may be, but is not limited to, sending a control command to a battery charge/discharge control module to trigger the battery charge/discharge module 32 to control a switching transistor in the battery charge/discharge module 32.

In summary, the MPPT module in this embodiment collects and calculates the output current and the output voltage of the photovoltaic module 12, and controls the inverter circuit 21 and/or the energy storage module 11 based on the difference between the output power and the maximum power set for the inverter circuit 21, to perform maximum power point tracking, thereby enhancing energy conversion efficiency of the photovoltaic system.

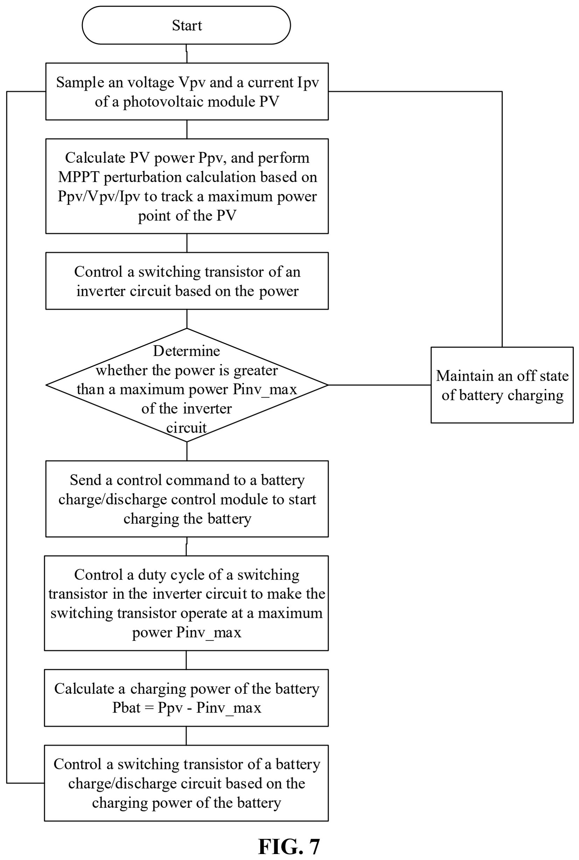

Based on the above embodiment, a workflow of the photovoltaic system is shown in FIG. 7. The workflow includes the following steps.
(1) An voltage Vpv and a current Ipv of a photovoltaic module PV is sampled. (2) PV power Ppv is calculated, and MPPT perturbation calculation is performed based on the Ppv/Vpv/Ipv to track a maximum power point of the PV. (3) A switching transistor of an inverter circuit is controlled based on the power. (4) Whether the power is greater than a maximum power Pinv_max of the inverter circuit is determined. (5) If the power is greater than the maximum power Pinv_max of the inverter circuit, a control command is sent to a battery charge/discharge control module to start battery charging, and if the power is not greater than the maximum power Pinv_max of the inverter circuit, an off state of battery charging is maintained. (6) A duty cycle of a switching transistor in the inverter circuit is controlled to make the switching transistor operate at the maximum power Pinv_max. (7) A charging power of the battery Pbat = Ppv - Pinv_max is calculated. (8) A switching transistor of a battery charge/discharge circuit is controlled based on the charging power of the battery.

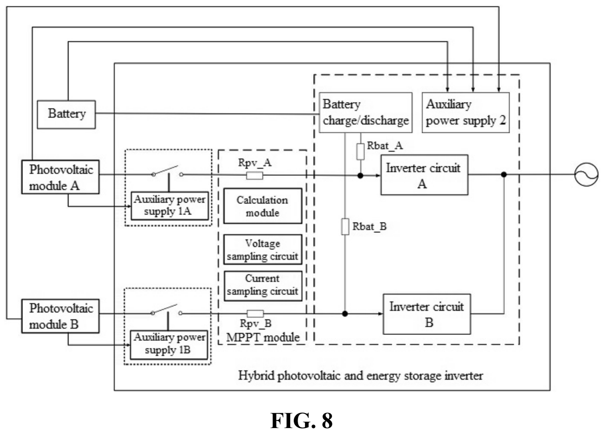

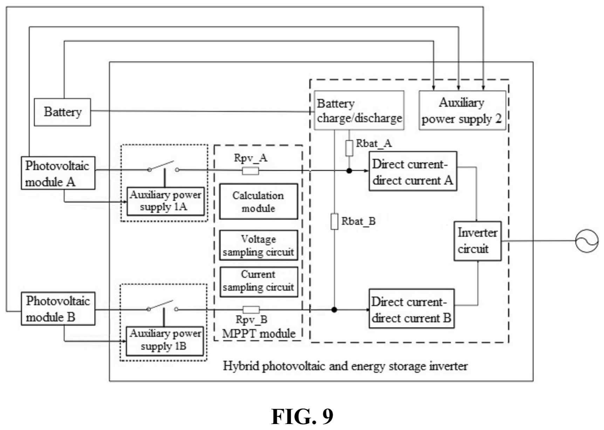

It should be noted that in this application, one photovoltaic module is used as an example, but two or more photovoltaic modules may be possible. As shown in FIG. 8, FIG. 8 illustrates another embodiment of the present disclosure, where two photovoltaic modules are used as input, and two inverter circuits connected in parallel are used as output. As shown in FIG. 9, FIG. 9 illustrates another embodiment of the present disclosure where two photovoltaic modules are used as input, and there are two independent direct current-direct current modules, and two direct current-direct current modules connected in parallel are used as output and connected to a direct current bus, and is then connected to an inverter circuit. In addition, the scope of the present disclosure is not limited to the above embodiments.

It should also be noted that in the present disclosure, terms used to characterize relationships, such as first and second, are only used to distinguish one entity or operation from another entity or operation. It is not necessarily required or implied that any such actual relationship or order exists among the entities or the operations. Moreover, terms "include", "contain" or any variants thereof are intended to be non-exclusive. Therefore, a procedure, method, article or apparatus including a series of elements includes not only the elements but also other elements that are not enumerated, or further includes elements inherent to the process, method, article or apparatus. Unless expressively limited, the statement "including a(n) ..." does not exclude the case that other similar elements may exist in such process, method, article or apparatus other than enumerated elements.

Based on the disclosed embodiments described above, those skilled in the art can implement or use the present disclosure. Various modifications to the embodiments are obvious to those skilled in the art, and general principles defined in the present disclosure may be implemented in other embodiments without departing from the spirit or scope of the present disclosure. Hence, the present disclosure is not limited to the embodiments described herein, and conforms to a widest scope in accordance with principles and novel features disclosed in the present disclosure.

## Claims

1. A photovoltaic system, comprising:
a photovoltaic module configured to supply power to an energy storage module and/or an inverter circuit;
the energy storage module, wherein an output terminal of the energy storage module is connected to an output terminal of the photovoltaic module, and the energy storage module is configured to receive power outputted from the photovoltaic module, or the energy storage module is configured to supply power to the inverter circuit when the photovoltaic module is not in operation; and
the inverter circuit, wherein an input terminal of the inverter circuit is connected to the output terminal of the photovoltaic module and the output terminal of the energy storage module, and the inverter circuit is configured to invert the power supplied from the photovoltaic module and/or the power supplied from the energy storage module to a grid.

2. The photovoltaic system according to claim 1, wherein when the photovoltaic module is provided with a voltage threshold of current backflow, the energy storage module is configured to receive the power outputted from the photovoltaic module, or the energy storage module is configured to supply a voltage lower than the voltage threshold of current backflow to the inverter circuit when the photovoltaic module is not in operation.

3. The photovoltaic system according to claim 1, further comprising:
a protection switch, wherein one terminal of the protection switch is connected to the output terminal of the photovoltaic module, the other terminal of the protection switch is connected to the output terminal of the energy storage module and the input terminal of the inverter circuit, and the protection switch is configured to be open when the photovoltaic module is not in operation and the energy storage module is supplying power to the inverter circuit.

4. The photovoltaic system according to claim 3, wherein the protection switch is configured to receive a control command when the photovoltaic module is not in operation and the energy storage module supplies power to the inverter circuit, and the protection switch is configured to make itself open based on the control command.

5. The photovoltaic system according to claim 3, wherein the protection switch is a relay, a MOSFET, or a contactor.

6. The photovoltaic system according to claim 3, further comprising:
a first auxiliary power supply, wherein one terminal of the first auxiliary power supply is connected to the output terminal of the photovoltaic module, the other terminal of the first auxiliary power supply is connected to a power supply terminal of the protection switch, and the first auxiliary power supply is configured to convert an output voltage of the photovoltaic module into a first preset voltage, to supply power to the protection switch,
wherein when the photovoltaic module is not in operation, a voltage outputted from the first auxiliary power supply is lower than the first preset voltage, and the protection switch is open.

7. The photovoltaic system according to claim 6, further comprising:
a second auxiliary power supply, wherein one terminal of the second auxiliary power supply is connected to the output terminal of the photovoltaic module and the output terminal of the energy storage module, the other terminal of the second auxiliary power supply is connected to a power supply terminal of the inverter circuit, and the second auxiliary power supply is configured to convert the output voltage of the photovoltaic module and/or an output voltage of the energy storage module into a second preset voltage, to supply power to units in the inverter circuit respectively.

8. The photovoltaic system according to any one of claims 1 to 7, further comprising:
a maximum power point tracking, MPPT, module, wherein an input terminal of the MPPT module is connected to the output terminal of the photovoltaic module, a first output terminal of the MPPT module is connected to a control terminal of the inverter circuit, the MPPT module is configured to detect an output power of the photovoltaic module, and the MPPT module is configured to perform maximum power point tracking based on the output power, to control operations of a switching transistor in the inverter circuit.

9. The photovoltaic system according to claim 8, wherein the MPPT module further comprises a second output terminal, and the second output terminal is connected to a control terminal of the energy storage module; and
the MPPT module is further configured to determine whether the output power of the photovoltaic module is greater than a maximum power set for the inverter circuit, and when the output power of the photovoltaic module is greater than the maximum power set for the inverter circuit, the MPPT module is further configured to control the switching transistor in the inverter circuit to operate at a maximum power state, and to control operations of a switching transistor in the energy storage module based on a difference between the output power and the maximum power.

10. The photovoltaic system according to claim 9, wherein the MPPT module comprises:
a current sampling circuit, wherein the current sampling circuit is connected to the output terminal of the photovoltaic module, and the current sampling circuit is configured to collect an output current of the photovoltaic module;
a voltage sampling circuit, wherein the voltage sampling circuit is connected to the output terminal of the photovoltaic module, and the voltage sampling circuit is configured to collect an output voltage of the photovoltaic module; and
a calculation module, wherein an input terminal of the calculation module is connected to an output terminal of the current sampling circuit and an output terminal of the voltage sampling circuit respectively, an output terminal of the calculation module is connected to the control terminal of the inverter circuit and the control terminal of the energy storage module respectively, the calculation module is configured to calculate the output power based on the output current and the output voltage, and the calculation module is configured to output a control signal to the inverter circuit and/or the energy storage module based on the output power and the maximum power set for the inverter circuit, to control operations of the switching transistor in the inverter circuit and/or the switching transistor in the energy storage module.
